# EUROPEAN PATENT SPECIFICATION

(11) **EP 3 639 133 B1**
(45) Date of publication and mention of the grant of the patent: **30.11.2022**
(21) Application number: 17734656.6
(22) Date of filing: 16.06.2017
(51) Int. Cl.: G06F 9/38, G06F 15/80, G06F 17/10, G06F 9/30

(54) **MULTIPLY ACCUMULATOR ARRAY AND PROCESSOR DEVICE**
ANORDNUNG AUS MULTIPLIKATOR-AKKUMULATOR UND PROZESSORVORRICHTUNG
RÉSEAU D'ACCUMULATEURS MULTIPLES ET DISPOSITIF PROCESSEUR

(43) Date of publication of application: 22.04.2020
(73) Proprietor: Huawei Technologies Co., Ltd., Longgang District Shenzhen, Guangdong 518129 (CN)
(72) Inventor: NOBILE, Andrea, 80992 Munich (DE); BOEHN, Gunnar, 80992 Munich (DE)
(74) Representative: MERH-IP Matias Erny Reichl Hoffmann Patentanwälte PartG mbB
(86) International application number: PCT/EP2017/064807
(87) International publication number: WO 2018/228703

(56) References cited:
- EP-A2- 2 017 743
- WO-A1-94/10638
- KR-A- 20170 052 432
- US-A- 5 081 573
- US-A1- 2002 198 911
- US-B2- 7 716 269

## Description

### Field of invention

The present invention, as set out in the claims, relates to the field of microprocessors, and specifically to multiply accumulator, MAC, arrays and a processor device comprising such a MAC array.

### Background

Matrix multiplication is a common operation occurring in numerical linear algebra algorithms, i.e. linear solvers, eigensolvers, digital filters, linear transforms, speech recognition, machine learning, statistics, etc. A prominent example are the convolution layers of convolutional neural networks that can be expressed as matrix times matrix multiplication. Variants of the matrix times matrix multiplication algorithm exploit blocking and execute accumulations of outer product of vectors in order to achieve a high ratio of arithmetic operations versus load and stores. A current efficient method to execute the outer product is to use "scalar times vector" or "value duplication plus element-wise vector product" instructions. These kind of instructions are present in many vector instruction extensions (SSE, AVX, Altivec, NEON). The usage of vector instructions is highly efficient due to the exploitation of data parallelism, however it incurs a limit in the number of arithmetic operations that can be executed with a single instruction, the limit being proportional to the vector length. Typically, when using a multiply-add instruction over vectors of length N, 2N arithmetic operations are executed. While increasing the vector length can provide a higher arithmetic operation performance, this also requires an upgrade of many other processor's functional blocks causing substantial additional cost and increase in power consumption. Therefore, there is a natural limit in a balanced system by how much the vector length can be increased.

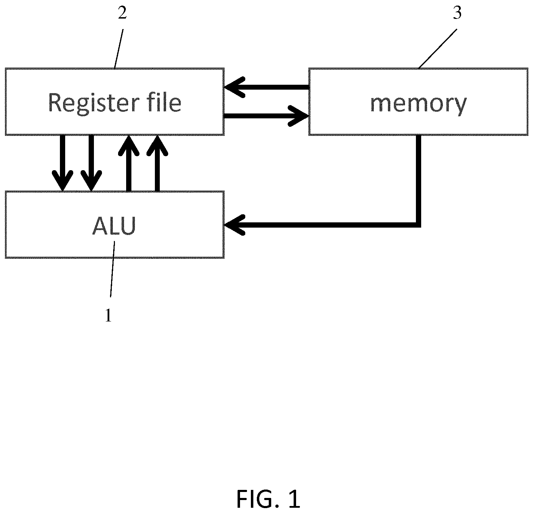

Generally, in a programmable micro processor, a part of which is schematically shown in Fig. 1, there are constraints in the amount of data that can be moved between the arithmetic logical units 1, the register files 2 and the integrated memory 3 due to physical, cost and complexity limitations. These factors limit the number of execution units that can be effectively used in the arithmetic logical units 1 of the micro processor.

In US 2002/198911 A1, a matrix processor with a row column interconnect mesh for standard tensor operations, like transpose, shuffle, and deal, is shown. The matrix processor further comprises identical processing elements arranged in rows and columns. Each processing element comprises a multiplier and two independent accumulators.

In US 5 081 573 a parallel processing system to utilize a plurality of simultaneously operable arithmetic units to provide matrix vector products is shown. Further it is shown that an arithmetic unit includes a first multiplier and a second multiplier.

### Summary of the invention

The object of the present invention is to provide a multiply accumulator, MAC array for a microprocessor, such as a programmable microprocessor, which is adapted to perform matrix multiplication in a more efficient and more flexible manner, as well as a processor device comprising an instruction decoder and such a MAC array. Further, the above identified disadvantages of the current technology should be overcome.

The above object is achieved by a multiply accumulator, MAC array as defined in claim 1. The invention provides a Multiply Accumulator, MAC, Array, comprising M × N MAC units arranged in M rows and N columns, each of the M rows of MAC units being connected to one of M data inputs and each of the N columns of MAC unit being connected to one of N data inputs, M and N being natural numbers, wherein each MAC unit comprises a multiply unit having two inputs and one output, an accumulator unit having a first and a second accumulator input and one accumulator output, and a plurality of register units having one input and one output, wherein, in each MAC unit, the one of M data inputs and the one of N data inputs form the two inputs of the multiply unit, the output of the multiply unit forms the first accumulator input and the output of the plurality of register units forms the second accumulator input, and the accumulator output forms the input of the plurality of register unit, wherein the MAC units are implemented as hardware components. Further, each MAC unit is labelled with two coordinates X and Y; row data inputs at coordinate X, row[X], are distributed to a whole column of MAC units, MAC[^{∗}][X]; and column data inputs at coordinate Y, col[Y], are distributed to a whole row of MAC units, MAC[Y][^{∗}].

In a first possible implementation manner of the MAC array according to the invention, each MAC unit has the same number of register units.

A second possible implementation manner of the MAC array according to the invention or according to the first possible implementation manner, further comprises a control means adapted to selectively control the sequence in which the register units in a MAC unit are instructed to send data to and/or receive data from the accumulator unit.

In a third possible implementation manner of the MAC array according to the invention or according to the first or second possible implementation manner, each of the register units is further configured to receive input data from a memory means and the register units are adapted to be initially loaded with said input data row by row or column by column from the memory means and/or write output data to said memory means row by row or column by column.

In a fourth possible implementation manner of the MAC array according to the invention or according to one of the previous possible implementation manners, a data conversion means adapted to perform a data conversion is located between the plurality of register units and the memory means.

In a fifth possible implementation manner of the MAC array according to the invention or according to one of the previous possible implementation manners, each register unit in a MAC unit has a separate physical input and a separate physical output, wherein the physical inputs are connected to the output of the accumulator unit by means of a demultiplexer and the physical outputs are connected to the second accumulator input by means of a multiplexer.

In a sixth possible implementation manner of the MAC array according to the invention or according to one of the previous possible implementation manners, each plurality of register units in a MAC unit respectively comprises 1^{st} to n-th register units, wherein all 1^{st} register units form a 1^{st} group and all n-th register units form a n-th group, wherein each group of register units is adapted to be addressed by a single MAC instruction, n being a natural number.

In a seventh possible implementation manner of the MAC array according to the invention or one of the previous possible implementation manners, the inputs and outputs of the multiply unit, the accumulator unit and the plurality of register units all have the same width.

In an eight possible implementation manner of the MAC array according to the invention or according to one of the first to sixth possible implementation manners, the accumulator unit and the plurality of register units respectively have a width that is larger than the inputs and outputs of the multiply unit.

In a ninth possible implementation manner of the MAC array according to the invention or according to one of the previous possible implementation manners, the multiply unit and the accumulator unit in each MAC unit are implemented as fixed point units.

In a tenth possible implementation manner of the MAC array according to the invention or according to one of the first to eight possible implementation manners, the multiply unit and the accumulator unit in each MAC unit are implemented as floating point units.

In an eleventh possible implementation manner of the MAC array according to the invention or according to one of the first to eight possible implementation manners, the multiply unit and the accumulator unit in each MAC unit are implemented as logarithmic units.

The above object is further achieved by a processor device according to claim 13, which includes an instruction decoder and a MAC array according to the invention as defined above or any of the possible implementation manners thereof. In this processor device, the MAC array is integrated as an execution unit within the instruction pipeline of said processor device.

In a possible implementation manner of the processor device according to the invention, the control means of the MAC array is configured to selectively control the sequence in which the respective register units are instructed to send and/or receive data to/from the accumulator unit based on the instruction and on a dependency of said data encoded by the instruction.

The MAC array according to the present invention, as defined in independent claim 1 and the processor device according to claim 13, as well as the optional advantageous features of the dependent claims, provides a more efficient and more flexible way to perform matrix multiplication in a such a processor device, which is for example be a micro processor, such as a programmable micro processor. The MAC array and the processor device as defined by the present invention hereby enables to increase the amount of arithmetic operations that can be executed in one processor cycle. This is particularly achieved by resolving the bottleneck of the limited available result storage space in the register units. The invention hereby enables the provision of dedicated instructions to the MAC array in order to execute the outer product of the matrix multiplication in the respective multiply units of each MAC unit, to execute the accumulation in the respective accumulation units of each MAC unit, and by using dedicated registers in each MAC unit to store the results of the multiplication and the accumulation in a tight connection to the arithmetic execution units (i.e. the multiply unit and the accumulator unit). By providing a plurality of register units in each MAC unit, the available result storage space can be adapted to the respective implementation and thus generally greatly enhances the flexibility and usability as compared to prior art solutions. The provision of a plurality of registers in each MAC unit allows working on bigger submatrices. This reduces the requirements of the memory subsystem alleviating the memory bottleneck and enables an out of order execution and allows a de-coupling of the microprocessor architecture from instruction set architecture. The invention particularly allows a down scaling of the arithmetic execution engine while keeping the software compatibility with more powerful and expensive implementations Thus, the invention gives better sustained performance by reducing the pressure on the memory subsystem and enabling out of order execution. Also, it enables techniques to increase the average number of operations done in s single clock cycle.

It has to be noted that all steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### Brief description of the drawings

The present invention will be explained in more detail in the following description of preferred embodiments in relation to the enclosed drawings, in which
Fig. 1 schematically shows a part of a microprocessor structure,
Fig. 2 shows a schematic explanation of a matrix multiplication,
Fig. 3 schematically shows a further explanation of a matrix multiplication,
Fig. 4 schematically shows a MAC unit of a MAC array according to the present invention,
Fig. 5 shows an implementation example of a MAC array according to the present invention,
Fig. 6 shows an explanation schematic of the mathematical calculation in the MAC array according to the present invention,
Fig. 7 shows a further schematic example regarding a mathematical implementation of the matrix multiplication in a MAC array according to the present invention,
Fig. 8 shows a comparison of the software and hardware views of the calculations implemented in a MAC array according to the present invention, and
Fig. 9 shows a schematic example of a MAC unit of a MAC array according to the present invention in greater detail.

### Detailed description of embodiments

The present invention presents a multiply accumulator MAC array which consists of M × N MAC units arranged in M rows and N columns, M and N being natural numbers. M and N can be the same or different from each other. The MAC array of the present invention enables the execution of the multiplication of the matrix with another matrix by exploiting the fact that the result of the multiplication can be expressed as a sum of outer products of the vectors composing the input matrices. In most prior art solutions, the definition of matrix multiplication mandates the computation of an inner product of two input vectors for every matrix element of the output.

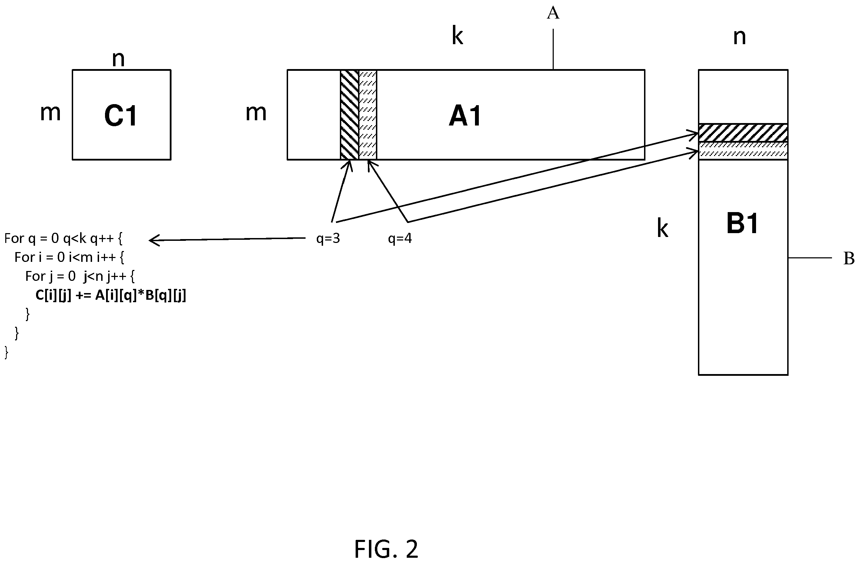

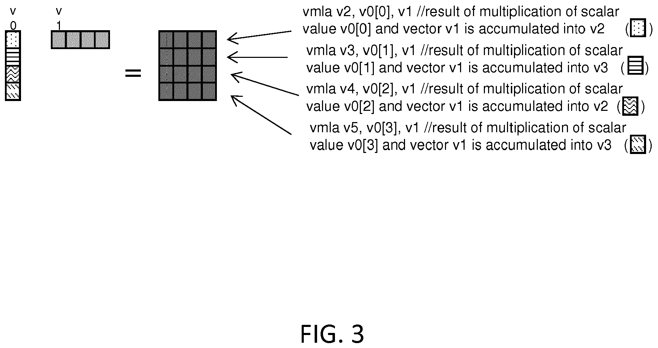

For better understanding, a general explanation of a multiplication of a matrix A with another matrix B is given in the following in reference to the schematic explanation of figures 2 and 3. The inner loops of the full matrix times matrix (e.g. A × B) algorithm, compute the product of two sub-matrices (blocks) A1 and B1 of the original input matrices A and B, producing as output a sub-matrix C1. This is shown schematically in Fig. 2.

The inner loop in Fig. 2 does one multiply and one addition every iteration. This formulation has the advantage that it can be easily vectorized. As an example Fig. 3 shows the computation of the outer product of two vectors using SIMD instructions with vectors of length 4. Vector v0 belongs to the sub-matrix A1, v1 to B1 of Fig. 2.

By studying Fig 3, it is to be noticed that the calculations of the 4 rows of the output are fully independent, i.e. they could in theory all be executed in parallel obtaining a four-fold performance improvement. This is in practice very difficult to achieve: at full throughput the machine needs to be able to provide 2 vectors, i.e. v1 and v0 as input to the multipliers, 4 vectors to the adders and simultaneously store 4 vector results to vector registers, already resulting in a very costly and complex design. If one wants to scale this solution to longer vectors, for example of length 8, the machine needs to be able to store simultaneously 8 vectors to vector registers requiring 8 write ports to the register file. This would result in a non-practical design due to the extreme complexity involved. The provision of MAC units in a MAC array as defined by the present invention provides an efficient and flexible solution to the problem, as explained in more detail below.

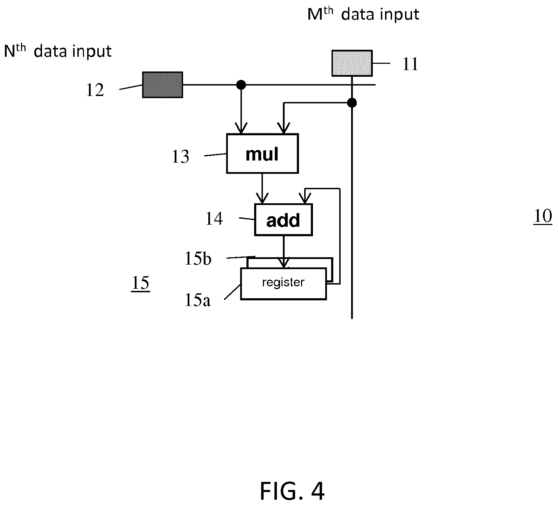

Fig. 4 schematically shows a MAC unit 10, which is part of a MAC array according to the invention. All entities and elements of the MAC unit 10 are implemented in hardware. The MAC unit 10 is connected to an M^{th} data input 11 of row data and N^{th} data input 12 of column data. Specifically, the MAC unit 10 comprises a multiply unit 13 adapted to multiply data through its two inputs, i.e. the data received from the M^{th} data input 11 and the N^{th} data input 12. The MAC unit 10 further comprises an accumulator unit 14 (also called adder) and one or more registers 15a and 15b. The reference number 15 generally characterizes the plurality of register units (also called accumulator registers) of a MAC unit 10 according to the present invention. The output of the multiply unit 13 is connected to a first input of the accumulator unit 14. A second input of the accumulator unit 14 is the output of the one or more register units 15a and 15b.

The number of actually implemented register units 15a and 15b in the MAC unit 10 depends on the intended implementation and gives flexibility in this respect.

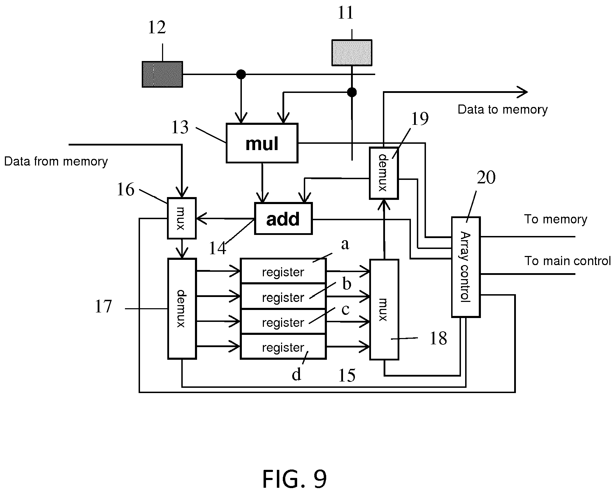

Fig. 9 shows a further and more detailed example of a MAC unit 10 according to the present invention, which is similar to the one shown in Fig. 4, but comprises four register units 15a, 15b, 15c and 15d. The MAC unit 10 further comprises, in addition to the multiply unit 13 and the accumulator unit 14, the structure and functionality of which is identical to the ones of Fig. 4, additional demultiplexing and multiplexing elements as well as an array control 20. Most specifically, each register unit 15a, 15b, 15c and 15d is connected to a multiplexer 18, the output of which is connected to a demultiplexer 19. The outputs of the demultiplexer 19 are connected to the second accumulator unit input, as well as to a memory, such as the memory 3 described in relation to Fig. 1. The inputs of the register units 15a, 15b, 15c and 15d are connected to a demultiplexer 17, which receives input from a multiplexer 16, which in turn can receives input from a memory, such as the memory 3 as explained in relation to Fig. 1, as well as the accumulator unit 14. Thus, the output of the accumulator unit 14 is connected to the multiplexer 16. The multiplexer 16, the demultiplexer 17, the multiplexer 18 and the demultiplexer 19 are all connected to and controlled by an array control unit 20. The array control unit 20 is connected to a main control unit of a related processor device, such as a programmable microprocessor or the like, as well as to the memory, such as the memory 3 as explained in relation to Fig. 1. The array control unit 20 is adapted to control the multiplexer 16, the demultiplexer 17 to switch data received from the memory and the accumulator unit 14 to the inputs of the respectively necessary registers 15a, 15b, 15c and 15d. Similarly, the array control unit 20 is further adapted to control the multiplexer 18 and the demultiplexer 19 to switch the outputs of the respectively necessary register unit 15a, 15b, 15c and 15d to the memory and/or the accumulator unit 14. Although the description above refers to a MAC unit comprising 4 registers (register units), MAC units with an arbitrary number of registers have the same design as described above.

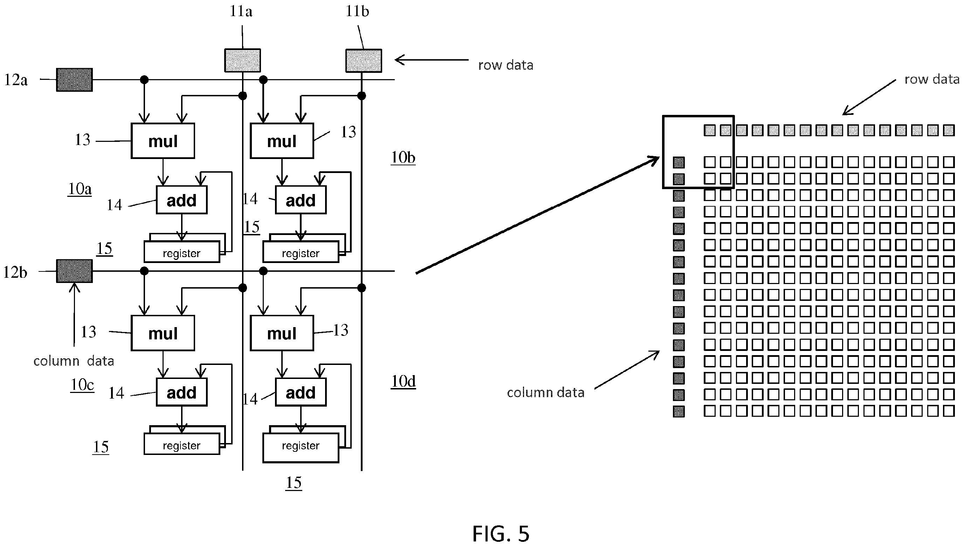

Fig. 5 shows a schematic example of a MAC array according to the present invention, all elements of which are implemented in hardware, and which in this example comprises 4 identical MAC units 10a, 10b, 10c, 10d arranged in 2 rows and in 2 columns. The example of the MAC array of Fig. 5 is adapted to execute the 2 most inner loops shown in Fig 2 in hardware. In order to execute the 2 loops in a single cycle the 2 dimensional MAC array of Fig. 5 is proposed. Every MAC 10 unit is connected to the plurality of accumulator registers 15a, b to store the result. The input data can be fed into the multipliers from registers, memory or fifos (of Fig. 1). An implementation example of the hardware is shown in the left part of Fig 5.

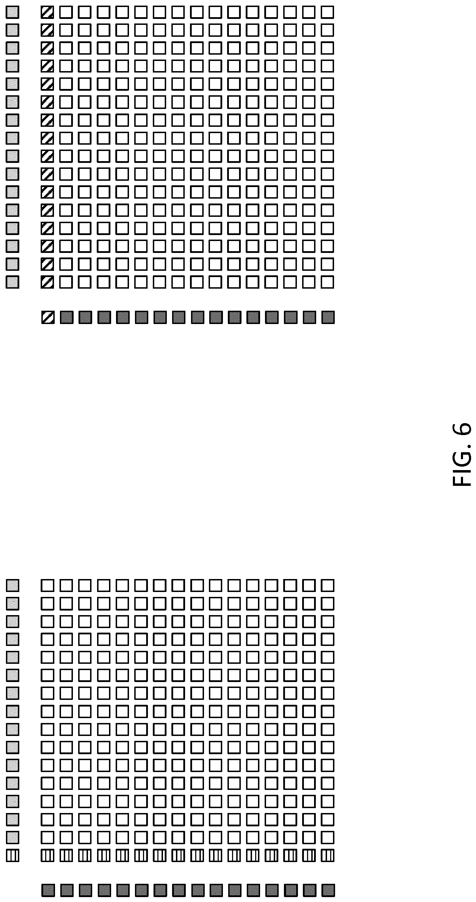

The 2 inputs labelled row data and column data are connected to the MAC units 10 in a regular way. The MACs are arranged in a 2 dimensional array of size M × N, each MAC unit is labelled with 2 coordinates X and Y. The distribution of the input data is as follows: row data element at coordinate X (row[X]) is distributed to a whole column of MACS MAC[^{∗}][X]. The same applies for the column data: column data element at coordinate Y (col[Y]) is distributed to a whole row of MACS MAC[Y][^{∗}]. Fig 6 highlights the data distribution.

The accumulator unit 14 of each MAC unit 10 has 2 inputs, one input is fed with data coming from the multiply unit 13 while the other input takes data from one of the register units 15 of the MAC unit 10. Depending on the needs of the application the multiply unit 13 and accumulator unit 14 can be implemented as floating point, integer or other algebraic system, logarithmic for example. In order to improve the accuracy of several accumulation operations, the width of the register units 15 and accumulator unit 14 could be wider than the inputs and/or multiply unit inputs/output.

One implementation could have all inputs and outputs 32bit wide and execute multiplication and addition in floating point. Another implementation might have all 16bit floating point input and execution units. An implementation using integer (fixed point) arithmetic might have 8bit wide inputs to the multiply unit, 16bit wide output of the multiply unit, 32bit wide register units, and the 2 inputs of the accumulator unit being one 16bit wide and the other 32bit wide 13. Yet another implementation might have 4bit logarithmic input to the multiply unit and execute the addition using lookup tables or other relevant method. In this case during data retrieval from register units 15 a conversion to logarithmic format might be performed.

During readout/retrieval of register(s) 15, in general a data conversion might be executed, for example clamping and/or width reduction/scaling. For example data can be down-converted from 32bit integer to 16bit integer.

In a multiple-register per MAC unit implementation, the program or the control hardware has the freedom to select which register units 15 to use for a given MAC operation.

### Advantages provided by multiple-accumulator register units 15:

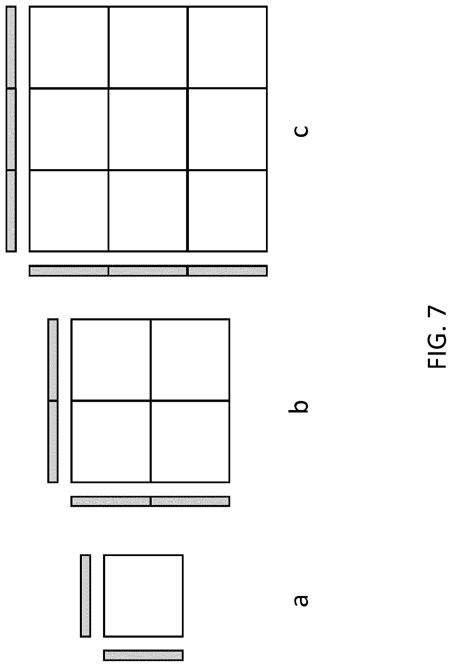

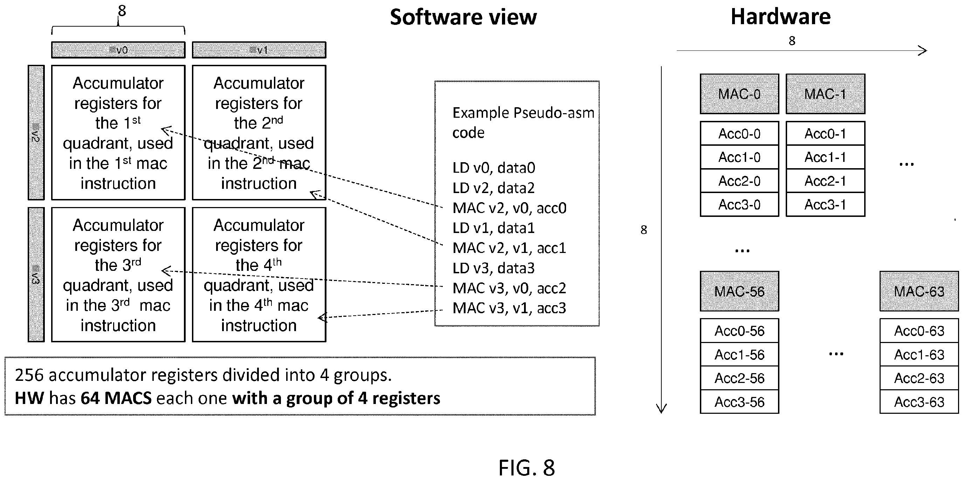

- Enables pipelining of accumulator unit: In the circuit of figures 5 and 6 one of the accumulator unit inputs is fed from the accumulator register 15. The feedback loop from the register 15 to adder 14 shows the sequential nature of the accumulation process. In an implementation using floating point it might be difficult to achieve high clock rates without pipelining the adder. Pipelining allows higher clock rates but requires that consecutive MAC operations are independent. To support this, the unit needs to be able to hold different independent results in several accumulator registers. Depending on the target clock rate of the circuit, also in the integer arithmetic case pipelining the adder 14 could be beneficial.
- Enables working on bigger result submatrix C1 (Fig 2). The underlying assumption is that the matrices A, B and C are bigger than the corresponding submatrices. The total amount of operations depends only on the size of the matrices A, B and C. The main advantage of working with a bigger submatrix is that there is a better ratio of arithmetic operations over data load. At given input bandwidth a higher performance can be achieved. It is also clear that the bigger the hardware MAC array, the less iterations are needed to complete the calculation. The amount of data load for computing the outer product of vectors scales linearly with the length of the vectors while the number of operations executed scales quadratically. If in a practical design there are constraints in area, cost, or power consumption that limit the size of the MAC array, an application can still benefit by using more registers to work on a bigger submatrix thereby better utilizing the available memory bandwidth. This is explained in relation to the schematic example of Fig. 7.
   In Fig 7 starting from left to right: a) 2 elements are loaded and one MAC-array operation can be executed. b) 4 elements are loaded allowing to do 4 MAC-array operations. c) Increasing the scheme again, 6 elements are loaded permitting to do 9 MAC-array operations. When a bigger scheme is used, each loaded element can be reused in others MAC-array operations thus clearly reducing requirements on the memory subsystem. Conversely, at fixed input bandwidth, increasing the scheme size, allows an increase in performance.
   In the implementation example shown in Fig. 8 there is a hardware MAC array with 64 MAC units 10 (8x8). To feed the MAC array, the machinery provides 8+8 (16) data elements. In the example apparatus there are 4 accumulator registers available to each MAC unit 10. This allows to operate on a 16x16 submatrix with an 8x8 hardware MAC array. Without the multiple registers the ratio of mac operations over data load is 64 to 16 (4), by using the 4 registers this ratio becomes 256 to 32 (8). So the requirement on the memory subsystem at fixed sustained performance halved.
   In Fig. 8, an example of a possible software implementation utilizing the hardware is given. In this case the register 15 to use is specified in the MAC instruction. On the right there is a detailed view of a section of the MAC units and the associated 4 accumulator registers. The labels on the registers identify respectively the group and the associated MAC. In the above implementation example all registers 15 of a given group are updated in parallel. i.e. "MAC v2, v0, acc0" uses group 0.
   The possibility of freely selecting the accumulator register 15, in contrast with a rigid, hardwired sequencing that can be provided by a FIFO, allows out of order execution of instructions. For example, taking the pseudo-code in Fig. 8 as reference, it can happen that input data for the "MAC v3, v0, acc2" instruction becomes available before the input data needed by the previous MAC instruction "MAC v2, v0, acc0". A machine providing out of order execution can then dynamically reorder the instructions and prioritize execution of the instructions for which the data is readily available, therefore increasing the sustained performance.
- Decoupling of the micro architecture from the ISA: The multiple accumulator registers 15 can be hidden from software. In this case, at the ISA level, there is only one register per MAC unit 10. Let's consider as an example a MAC instruction that assumes a MAC array of size 16x16 and vectors of length 16, in this case, the minimum number of accumulator registers is 256. If due to design constraints a smaller MAC array is necessary, say an 8x8, it's still possible to implement the 16x16 MAC instruction by using the 8x8 MAC array. The solution is to have 4 registers for each MAC unit thus satisfying the 256 register requirement of the 16x16 instruction and having the hardware to transparently sequence through the 4 quadrants similarly to what shown in Fig 8. The difference being the vectors hold 16 elements instead of 8 and there is only one vector per side, only one MAC instruction in assembly code and a maximum throughput of one 16x16 MAC instruction every 4 cycles.
- The shape of the working submatrix C1 and of the hardware MAC array is not restricted to be square although the square shape has the advantage of minimizing data load.

### Example for Initialization, Preloading and Readout of the accumulator registers (i.e. register units 15):

The 2 inner loops in Fig. 2 perform accumulation on the submatrix C1. The data belonging to C1 is stored temporarily in the accumulator registers. The machine must thus be able to execute at least two basic operations involving the accumulator registers: loading them with data, and readout the data and storing it to other machine registers or to memory. Loading and readout of the accumulator registers can be triggered by a single instruction (load/store to/from memory) or can be executed as a series of instructions each loading/storing a single row or column of the accumulator registers to/from other machine registers or memory.

A useful functionality is to be able to initialize the content of the accumulator registers with 0 using a single instruction. Since the aggregate size of accumulator registers, in a typical implementation is much bigger than a typical machine register, single-instruction 0-initialization (reset) can provide speedup over an implementation that uses loads to initialize the accumulator registers to 0.

### Examples of MAC array instructions, partial MAC array utilization:

Acc# identifies the accumulator group in case of multiple registers per MAC
Load/store entire accumulator array from/to memory:
   ldacc acc#, address
   stacc acc#, address
Load/store row/col accumulator from/to memory:
   ldacrw acc#, row#, address
   stacrw acc#, row#, address
   ldaccl acc#, col#, address
   staccl acc#, col#, address
Load/store row/col accumulator from/to register:
   movacrw acc#, row#, reg
   movacrw reg, acc#, row#
   movaccl acc#, col#, reg
   movaccl reg, acc#, col#

Accumulator registers rows and columns could be read/written as a stack, circular buffer, or fifo without explicit row/col numbering. In this case the above instruction examples should be changed by simply removing the row# or col#.
Reset accumulator registers
rstacc acc#

Normal MAC array operation:
v0, v1, v2 are vector registers, the vector length is defined by the register size acc0, acc1 defines the subset of accumulator registers to be used as output.
mac v0, v1, acc0
mac v1, v2, acc1

MAC array operation with partial length inputs:
v0, v1 are vector registers, the length n and m to be used are specified by special instructions, this is useful to handle efficiently inputs of size less than the hardware vector length
macn n
macm m
mac v0, v1, acc0

MAC array operation with partial length inputs, explicit shape:
v0, v1 are vector registers, the length n and m to be used are encoded in the instruction, this is useful to handle efficiently inputs of size less than the hardware vector length
mac v0,n,v1,m, acc0

Simplest case:
Accumulator subset might not be specified in case there is only one accumulator register block
mac v0, v1

The present invention has been described in conjunction with various embodiments as examples as well as implementations. However, other variations can be understood and effected by those persons skilled in the art and practicing the claimed invention, form the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. AMultiply Accumulator, MAC, Array, comprising MxNMAC units (10) arranged in M rows and N columns, each of the M rows of MAC units (10) being connected to one of M data inputs and each of the N columns of MAC unit (10) being connected to one of N data inputs, M and N being natural numbers,
wherein each MAC unit (10) comprises a multiply unit (13) having two inputs and one output, an accumulator unit (14) having a first and a second accumulator input and one accumulator output, and a plurality of register units (15) having one input and one output,
wherein, in each MAC unit (10), the one of M data inputs and the one of N data inputs form the two inputs of the multiply unit (13), the output of the multiply unit (13) forms the first accumulator input and the output of the plurality of register units (15) forms the second accumulator input, and the accumulator output forms the input of the plurality of register unit (15),
wherein the MAC units (10) are implemented as hardware components,
wherein: each MAC unit is labelled with two coordinates Xand Y; row data inputs at coordinate X, row[X], are distributed to a whole column of MAC units, MAC[^{∗} ][X]; and column data inputs at coordinate Y, col[Y], are distributed to a whole row of MAC units, MAC[Y][^{∗} ].

2. The MAC array according to claim 1, wherein each MAC unit (10) has the same number of register units (15 a, b).

3. The MAC array according to claim 1 or 2, further comprising a control means adapted to selectively control the sequence in which the register units (15) in a MAC unit (10) are instructed to send data to and/or receive data from the accumulator unit (14).

4. The MAC array according to claim 1, 2 or 3, wherein each of the register units (15) is further configured to receive input data from a memory means and the register units (15) are adapted to be initially loaded with said input data row by row or column by column from the memory means and/or write output data to said memory means row by row or column by column.

5. The MAC array according to claim 4, wherein a data conversion means adapted to perform a data conversion is located between the plurality of register units (15) and the memory means.

6. The Mac array according to one of the claims 1 to 5, wherein each register unit (15) in a MAC unit (10) has a separate physical input and a separate physical output, wherein the physical inputs are connected to the output of the accumulator unit (14) by means of a demultiplexer (17) and the physical outputs are connected to the second accumulator input by means of a multiplexer (18).

7. The MAC array according to one of the claims 1 to 6, wherein each plurality of register units (15a, b) in a MAC unit (10) respectively comprises 1st to n-th register units (15 a, b), wherein all 1 st register units form a 1 st group and all n-th register units (15 a, b) form a n-th group, wherein each group of register units (15a) is adapted to be addressed by a single MAC instruction, n being a natural number.

8. The MAC array according to one of the claims 1 to 7 wherein the inputs and outputs of the multiply unit (13), the accumulator unit (14) and the plurality of register units (15) all have the same width.

9. The MAC array according to one of the claims 1 to 7, wherein the accumulator unit (14) and the plurality of register units (15) respectively have a width that is larger than the inputs and outputs of the multiply unit (13).

10. The MAC array according to one of the claims 1 to 9, wherein the multiply unit (13) and the accumulator unit (14) in each MAC unit (10) are implemented as fixed point units.

11. The MAC array according to one of the claims 1 to 9, wherein the multiply unit (13) and the accumulator unit (14) in each MAC unit (10) are implemented as floating point units.

12. The MAC array according to one of the claims 1 to 7, wherein the multiply unit (13) and the accumulator unit (14) in each MAC unit (10) are implemented as logarithmic units.

13. Aprocessor device including an instruction decoder and the MAC array of any one of claims 1 to 12, wherein the MAC array is integrated as an execution unit within the instruction pipeline of said processor device.

14. The processor device according to claim 13, wherein the control means of the MAC array is configured to selectively control the sequence in which the respective register units (15) are instructed to send and/or receive data to/from the accumulator unit (14) based on the instruction and on a dependency of said data encoded by the instruction.

## Patentansprüche

1. Multiplikationsakkumulator(Multiply Accumulator - MAC)-Array, umfassend M × N MAC-Einheiten (10), die in M Zeilen und N Spalten angeordnet sind, wobei jede der M Zeilen von MAC-Einheiten (10) mit einer von M Dateneingaben verbunden ist und jede der N Spalten von der MAC-Einheit (10) mit einer von N Dateneingaben verbunden ist, wobei M und N natürliche Zahlen sind,
wobei jede MAC-Einheit (10) eine Multiplikationseinheit (13), die zwei Eingaben und eine Ausgabe aufweist, eine Akkumulatoreinheit (14), die eine erste und eine zweite Akkumulatoreingabe und eine Akkumulatorausgabe aufweist, und eine Vielzahl von Registereinheiten (15) umfasst, die eine Eingabe und eine Ausgabe aufweist,
wobei in jeder MAC-Einheit (10) die eine von M Dateneingaben und die eine von N Dateneingaben die beiden Eingaben der Multiplikationseinheit (13) ausbilden, wobei die Ausgabe der Multiplikationseinheit (13) die erste Akkumulatoreingabe ausbildet und die Ausgabe der Vielzahl von Registereinheiten (15) die zweite Akkumulatoreingabe ausbildet und die Akkumulatorausgabe die Eingabe der Vielzahl von Registereinheiten (15) ausbildet,
wobei die MAC-Einheiten (10) als Hardwarekomponenten implementiert sind,
wobei: jede MAC-Einheit mit zwei Koordinaten X benannt ist und X Zeilendateneingaben an Koordinate X Zeile[X]auf eine ganze Spalte von MAC-Einheiten MAC[*][X] verteilt sind; und Spaltendateneingaben an Koordinate Y col[Y] auf eine ganze Zeile von MAC-Einheiten, MAC[Y][*] verteilt sind.

2. MAC-Array nach Anspruch 1, wobei jede MAC-Einheit (10) die die gleiche Anzahl von Registereinheiten (15a, b) aufweist.

3. MAC-Array nach Anspruch 1 oder 2, ferner umfassend ein Steuermittel, das angepasst ist, um die Sequenz wahlweise zu steuern, in der es den Registereinheiten (15) in einer MAC-Einheit (10) befohlen wird, Daten an die Akkumulatoreinheit (14) zu senden und/oder von dieser zu empfangen.

4. MAC-Array nach Anspruch 1, 2 oder 3, wobei jede der Registereinheiten (15) ferner konfiguriert ist, um Eingabedaten von einem Speichermittel zu empfangen, und die Registereinheiten (15) angepasst sind, um mit den Eingabedaten zeilenweise oder spaltenweise aus dem Speichermittel anfänglich geladen zu werden und/oder zeilenweise oder spaltenweise Ausgabedaten in das Speichermittel zu schreiben.

5. MAC-Array nach Anspruch 4, wobei sich ein Datenumsetzungsmittel, das angepasst ist, um eine Datenumsetzung durchzuführen, zwischen der Vielzahl von Registereinheiten (15) und dem Speichermittel gelegen ist.

6. MAC-Array nach einem der Ansprüche 1 bis 5, wobei jede Registereinheit (15) in einer MAC-Einheit (10) eine separate physische Eingabe und eine separate physische Ausgabe aufweist, wobei die physischen Eingaben mit der Ausgabe der Akkumulatoreinheit (14) mittels eines Demultiplexers (17) verbunden sind und die physischen Ausgaben mit der zweiten Akkumulatoreingabe mittels eines Multiplexers (18) verbunden sind.

7. MAC-Array nach einem der Ansprüche 1 bis 6, wobei jede Vielzahl von Registereinheiten (15a, b) in einer MAC-Einheit (10) jeweils eine erste bis n-te Registereinheit (15a, b) umfasst, wobei alle erste Registereinheiten eine erste Gruppe ausbilden und alle n-ten Registereinheiten (15a, b) eine n-te Gruppe ausbilden, wobei jede Gruppe von Registereinheiten (15a) angepasst ist, um durch eine einzelne MAC-Befehl adressiert zu werden, wobei n eine natürliche Zahl ist.

8. MAC-Array nach einem der Ansprüche 1 bis 7, wobei die Eingaben und Ausgaben der Multiplikationseinheit (13), der Akkumulatoreinheit (14) und der Vielzahl von Registereinheiten (15) alle die gleiche Breite aufweisen.

9. MAC-Array nach einem der Ansprüche 1 bis 7, wobei die Akkumulatoreinheit (14) und die Vielzahl von Registereinheiten (15) jeweils eine Breite aufweisen, die größer ist als die Eingaben und Ausgaben der Multiplikationseinheit (13).

10. MAC-Array nach einem der Ansprüche 1 bis 9, wobei die Multiplikationseinheit (13) und die Akkumulatoreinheit (14) in jeder MAC-Einheit (10) als Festkommaeinheiten implementiert sind.

11. MAC-Array nach einem der Ansprüche 1 bis 9, wobei die Multiplikationseinheit (13) und die Akkumulatoreinheit (14) in jeder MAC-Einheit (10) als Gleitkommaeinheiten implementiert sind.

12. MAC-Array nach einem der Ansprüche 1 bis 7, wobei die Multiplikationseinheit (13) und die Akkumulatoreinheit (14) in jeder MAC-Einheit (10) als logarithmische Einheiten implementiert sind.

13. Prozessorvorrichtung, die einen Befehlsdecodierer und das MAC-Array nach einem der Ansprüche 1 bis 12 einschließt, wobei das MAC-Array als eine Ausführungseinheit innerhalb der Befehlspipeline der Prozessorvorrichtung integriert ist.

14. Prozessorvorrichtung nach Anspruch 13, wobei das Steuermittel des MAC-Arrays konfiguriert ist, um die Sequenz wahlweise zu steuern, in der es den jeweiligen Registereinheiten (15) befohlen wird, Daten an die Akkumulatoreinheit (14) zu senden und/oder von dieser zu empfangen, basierend auf dem Befehl und auf einer Abhängigkeit der durch den Befehl codierten Daten.

## Revendications

1. Réseau d'accumulateur multiplicateur, MAC, comprenant M × N unités MAC (10) agencées en M rangées et N colonnes, chacune des M rangées d'unités MAC (10) étant connectée à l'une des M entrées de données et chacune des N colonnes de L'unité MAC (10) étant connectée à l'une des N entrées de données, M et N étant des nombres naturels,
chaque unité MAC (10) comprenant une unité de multiplication (13) ayant deux entrées et une sortie, une unité d'accumulation (14) ayant une première et une seconde entrée d'accumulateur et une sortie d'accumulateur, et une pluralité d'unités de registre (15) ayant une entrée et une sortie,
dans chaque unité MAC (10), l'une de M entrées de données et l'une de N entrées de données formant les deux entrées de l'unité de multiplication (13), la sortie de l'unité de multiplication (13) formant la première entrée d'accumulateur et la sortie de la pluralité d'unités de registre (15) formant la seconde entrée d'accumulateur, et la sortie de l'accumulateur formant l'entrée de la pluralité d'unités de registre (15),
les unités MAC (10) étant mises en œuvre en tant que composants matériels,
chaque unité MAC étant étiquetée avec deux entrées de données de rangée de coordonnées X et X à la rangée de coordonnée X [X], étant réparties sur une colonne entière d'unités MAC, MAC [*] [X] ; et les entrées de données de colonne à la coordonnée Y col [Y], étant réparties sur une rangée entière d'unités MAC, MAC [Y] [*].

2. Réseau MAC selon la revendication 1, dans lequel chaque unité MAC (10) a le même nombre d'unités de registre (15a, b).

3. Réseau MAC selon la revendication 1 ou 2, comprenant en outre un moyen de commande adapté pour commander sélectivement la séquence, les unités de registre (15) dans une unité MAC (10) étant invitées à envoyer des données à et/ou à recevoir des données provenant de l'unité d'accumulateur (14).

4. Réseau MAC selon la revendication 1, 2 ou 3, dans lequel chacune des unités de registre (15) est en outre configurée pour recevoir des données d'entrée d'un moyen de mémoire et les unités de registre (15) sont adaptées pour être initialement chargées avec lesdites données d'entrée rangée par rangée ou colonne par colonne à partir du moyen de mémoire et/ou écrire des données de sortie dans ledit moyen de mémoire rangée par rangée ou colonne par colonne.

5. Réseau MAC selon la revendication 4, dans lequel un moyen de conversion de données adapté pour effectuer une conversion de données est situé entre la pluralité d'unités de registre (15) et le moyen de mémoire.

6. Réseau Mac selon l'une quelconque des revendications 1 à 5, dans lequel chaque unité de registre (15) dans une unité MAC (10) a une entrée physique séparée et une sortie physique séparée, les entrées physiques étant connectées à la sortie de l'unité d'accumulateur (14) au moyen d'un démultiplexeur (17) et les sorties physiques sont connectées à la seconde entrée d'accumulateur au moyen d'un multiplexeur (18).

7. Réseau MAC selon l'une quelconque des revendications 1 à 6, dans lequel chaque pluralité d'unités de registre (15a, b) dans une unité MAC (10) comprend respectivement de 1ère à nième unités de registre (15a, b), toutes les 1ères unités de registre formant un 1er groupe et toutes les nièmes unités de registres (15a, b) forment un nième groupe, chaque groupe d'unités de registres (15a) étant adapté pour être adressé par une seule instruction MAC, n étant un nombre naturel.

8. Réseau MAC selon l'une quelconque des revendications 1 à 7, dans lequel les entrées et sorties de l'unité de multiplication (13), de l'unité d'accumulation (14) et de la pluralité d'unités de registre (15) ont toutes la même largeur.

9. Réseau MAC selon l'une quelconque des revendications 1 à 7, dans lequel l'unité d'accumulation (14) et la pluralité d'unités de registre (15) ont respectivement une largeur qui est plus grande que les entrées et sorties de l'unité de multiplication (13).

10. Réseau MAC selon l'une quelconque des revendications 1 à 9, dans lequel l'unité de multiplication (13) et l'unité d'accumulation (14) dans chaque unité MAC (10) sont mises en œuvre sous forme d'unités à virgule fixe.

11. Réseau MAC selon l'une quelconque des revendications 1 à 9, dans lequel l'unité de multiplication (13) et l'unité d'accumulation (14) dans chaque unité MAC (10) sont mises en œuvre sous forme d'unités à virgule flottante.

12. Réseau MAC selon l'une quelconque des revendications 1 à 7, dans lequel l'unité de multiplication (13) et l'unité d'accumulation (14) dans chaque unité MAC (10) sont mises en œuvre sous forme d'unités logarithmiques.

13. Dispositif processeur comportant un décodeur d'instructions et le réseau MAC selon l'une quelconque des revendications 1 à 12, dans lequel le réseau MAC est intégré en tant qu'unité d'exécution à l'intérieur du pipeline d'instructions dudit dispositif processeur.

14. Dispositif de processeur selon la revendication 13, dans lequel le moyen de commande du réseau MAC est configuré pour commander sélectivement la séquence, les unités de registre respectives (15) recevant l'ordre d'envoyer et/ou de recevoir des données vers/depuis l'unité d'accumulation (14) en fonction de l'instruction et d'une dépendance desdites données codées par l'instruction.
